# EUROPEAN PATENT SPECIFICATION

(11) **EP 1 130 911 B1**
(45) Date of publication and mention of the grant of the patent: **18.08.2004**
(21) Application number: 00301617.7
(22) Date of filing: 29.02.2000
(51) Int. Cl.: H04N 5/445

(54) **Interactive digital television system and method of grouping data objects**
Interaktives digitales Fernsehsystem und Verfahren zur Gruppierung von Datenobjekten
Système interactif de télévision numérique et méthode pour grouper des objets de données

(43) Date of publication of application: 05.09.2001
(73) Proprietor: Sony Service Centre (Europe) N.V., 1840 Londerzeel (BE)
(72) Inventor: Heughebaert, André c/o Sony Digital Media Europe, Brussels 1130 (BE); De Ceulaer, Luc c/o Sony Digital Media Europe, Brussels 1130 (BE)
(74) Representative: Ayers, Martyn Lewis Stanley

(56) References cited:
- WO-A-96/19074
- WO-A-98/56188
- US-A- 5 903 816
- US-A- 5 977 962

## Description

The present invention relates to an interactive digital hardware/software system of layered structure and a method of grouping data objects, in particular to grouping data objects which are displayed on the system using input keys on a control unit.

WO98/56188 describes a internet on-demand system for television which presents internet content and traditional television programming as part of a single coherent interface. The system includes a server and a client capable of providing a dynamic graphical user interface. The system can display an internet gateway interface which actively scrolls through and highlights links to selected web pages which are organised according to templates corresponding to their content. The web pages are presented on the graphical user interface as channels as part of the same milieu as channels of traditional television programming. The user can select a channel from a rotary menu wheel or via channel-up, channel-down buttons on the remote control device.

US 5,903,816 describes a system and method for displaying still video images related to video content in an interactive broadcast television system. The system and method may also be used for simulating an Internet home page on an interactive television system. The system thus supports hyperlinked web-like navigational capabilities in an interactive television system.

Various functions are now available on interactive digital television systems requiring data manipulation. In particular, various data objects such as still images, may be displayed on the television screen of the system. For various reasons, it is desirable to be able to group these data objects together and then process a group as one unit. For instance, a plurality of images may be available from a camera on the system. Of these images, the user may wish to move some of them to a memory and delete others.

Manipulation of data objects on the screen of a computer is known using a keyboard or a mouse. However, the present application recognises the need to enable grouping and manipulation of data objects using only the remote unit of the television systems.

According to the present invention there is provided a method of grouping data objects displayed on an interactive digital hardware/software system of layered structure using the input keys of the control unit of the system, the method comprising:
displaying the data objects on the display of the system and highlighting one of the displayed data objects;
using at least one first input key of the input keys of the control unit to cause the display to move the highlighting to successive displayed data objects; and
using at least one second input key of the input keys of the control unit to selectively assign the currently highlighted data object to a respective group; wherein
when a data object is assigned to a respective group, an image associated with said respective group is displayed with said data object.

According to the present invention there is also provided an interactive digital hardware/software system of layered structure comprising:
a display driver for displaying on a display images; and
a control unit including a plurality of input keys for controlling the system; wherein
the display driver is also for displaying on the display a plurality of data objects and applying highlighting to any one of the displayed data objects;
the input keys of the control unit include at least one first input key for causing the display driver to move the highlighting to successive displayed data objects and at least one second input key for selectively assigning the currently highlighted data object to a respective group; and
when a data object is assigned to a respective group, the display driver causes the display to display with said data object an image associated with said respective group.

In this way, data objects displayed on the screen of a television system may be grouped together easily with only the use of two input keys. Furthermore, these input keys need not be special input keys provided specifically for the purpose of grouping data objects, but can be any of the normal input keys provided on the control unit for controlling the television system, for instance for changing channel, adjusting brightness, adjusting volume etc.

The invention is applicable to all software applications with a graphical user interface. More precisely, it may be applied, whenever a set of items is presented (displayed) to the user, and the user may select (group) a subset of these items in order to apply an action on all so grouped items.

It is even more useful if the user may want to build several groups before applying actions to each of these groups. In this case, these groups may overlap, i.e. some of the presented items may be contained in more than one group.

The merit of the invention is that the user can build several - possibly overlapping - groups of items before applying actions to the so grouped elements. In conventional systems, items may be grouped in only a single group.

In comparison with previous systems where menus or list boxes allow multiple selection of objects to a single group, the present invention allows multiple and even overlapping groups to be constructed.

By providing the associated image for grouped data objects, a user may easily consider each data object in turn by moving the highlighting from one data object to the next whilst been presented with a visual indication of how the data objects have been grouped so far.

The data objects may be highlighted in any convenient manner, for instance changing the brightness, changing the colour balance, providing a special border etc.

Preferably, the input keys of the control unit include two or more second input keys for selectively assigning the currently highlighted data object to respective groups.

In this way, each data object may be assigned to one or more groups.

Preferably, the input keys of the control unit include standard red, green, blue and yellow input keys and the red, green, blue and yellow input keys are second input keys for assigning data objects to respective groups.

These input keys provide convenient input keys which the user can easily associate with different groups.

In this case, the images associated with the respective groups can be red, green, blue and yellow respectively corresponding to the four groups having associated red, green, blue and yellow input keys.

The image associated with a group preferably corresponds in appearance to the designation of the at least one second input key used to assign data objects to the group.

Thus, where the coloured input keys are used, the image can have a corresponding colour. Alternatively, if numeric keys are used as second input keys, then the respective images may be the corresponding numbers of the keys. Similarly, where special function input keys are used, the symbol associated with those keys on the control unit can be used as the corresponding image.

Of course the image can also make use of other features in combination with the features associating it with its group. For instance, all of the images might have the form of a marker pin. In the case of the coloured input keys, the pin could take the colour of the associated input key and, in the case of the numeric keys, the pin could include the associated number on its side. Other images are also possible, such as stars, flags etc.

Preferably, the second input keys are additionally for selectively de-assigning the currently highlighted object to the associated group.

In this way, the user merely actuates an input key to assign a data object to a group and actuates the same input key a second time to remove that data object from that group.

Preferably, the system includes means for processing data objects, for instance moving, copying or deleting them. In this case all of the data objects assigned to a particular group may be processed together.

This allows a user to view all of the data objects together and decide which data objects should be processed in which way. It is then a simple matter to initiate the processing on a group by group basis. This is particularly advantageous when data objects may belong to several different groups and they require processing in several different ways. For a user to individually process the data groups one by one with several different processes, it may be difficult to keep track of which data objects have been processed by which process.

Preferably, when processing of data objects is to be conducted, actuation of one of said at least one second input keys will cause the processing to be conducted on all of the data objects assigned to the respective group.

Since all of the data objects are marked with the images associated with the respective groups, when a particular process is chosen, it is clear to the user which data objects will be processed by actuating the input key corresponding to the correspondingly marked data objects.

The control unit may be a remote control unit. Typically, television systems use relatively standard remote control units and it is preferable that the first and second input keys are provided in these units.

An interactive digital television system may be provided as part of an integrated digital television or as part of a set top box. In either case, it is of particular advantage with MHEG, MHP (Multimedia Home Platform) and other standards for DVB (Digital Video Broadcast).

The present invention may be implemented in software for application to appropriate devices. It is particularly advantageous with layered program structures using an application program.

Thus, according to the present invention there may also be provided a method of grouping data objects displayed on an interactive digital hardware/software system of layered structure using the input keys of the control unit of the system controlled by an application program running on layered programs, the method comprising:
displaying the data objects on the display of the interactive digital television system and highlighting one of the displayed data objects;
using at least one first input key of the input keys of the control unit to cause the display to move the highlighting to successive displayed data objects; and
using at least one second input key of the input keys of the control unit to selectively assign the currently highlighted data object to a respective group; wherein
when a data object is assigned to a respective group, an image associated with said respective group is displayed with said data object.

In this way the invention may be implemented on any platform

The invention will be more clearly understood from the following description, given by way of example only, with reference to the accompanying drawings, in which;
Figure 1 illustrates a television system embodying the present invention;
Figure 2 illustrates the display of a plurality of data objects;
Figure 3 illustrates data objects together with associated group images;
Figure 4 illustrates a group image;
Figures 5 and 6 illustrates a menu on the television screen of the system; and
Figure 7 illustrates a layered structure in which the present invention may be embodied.

The present application concerns a digital television system including a television display 2 and a remote control unit 4. A processing unit 6 including a display driver and for providing television pictures and interactive services maybe formed integrally with the display 2 or, as illustrated, as a separate unit. The system may also include other components, such as a digital still camera 8.

The interactive digital television system is capable of handling many types of data files and processing and manipulating these in accordance with the commands of the user. Many of these data files will have associated representations which may appear on the television screen 2. These representations and the data with which they are associated are here described as data objects. By manipulating the data objects on the television screen 2, the files may be manipulated.

The following example considers the use of a photo gallery on the television system in which a plurality of digital pictures may be stored.

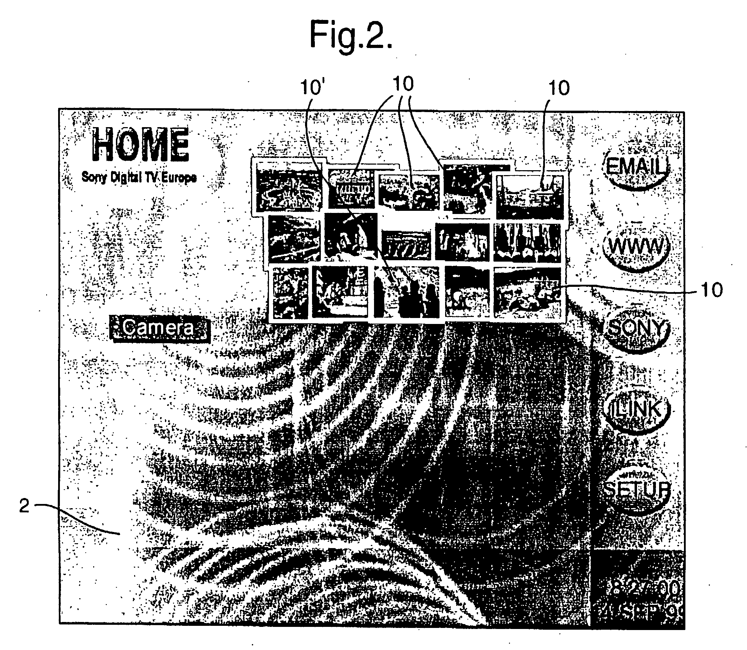

Figure 2 illustrates display 2 showing the contents of the digital still camera 8. In particular, all of the pictures stored on the camera 8 are illustrated as data objects 10 on the screen 2.

It may be that the user wishes to select some of these pictures or data objects 10 in order to copy them into another physical storage such as a hard disc drive connected to the television system, for instance over I-link.

The remote control unit 4 has a number of input keys 12, 14, 16, 18 and 20. In the illustrated embodiment, these input keys include arrow keys 20 for moving cursors around various items on the screen and red, green, blue and yellow keys, 12, 14, 16 and 18 used for example for accessing teletext pages.

According to the present invention one of the data objects, marked 10', of pictures 10 is highlighted on the display 2. This may be achieved in any appropriate manner. For instance, the highlighted picture may be displayed brighter than the other pictures or maybe identified by a special border.

By using one or more of the input keys 20, the system allows the user to move the highlighting to successive displayed data object pictures. In other words, each time the appropriate input key is actuated, the currently highlighted data object picture returns to normal appearance and an adjacent data object picture is highlighted. In this way, the user may successively highlight all of the data object pictures in a manner one by one.

In the illustrated embodiment, a user may assign the highlighted data object picture to a particular group by actuating one of the coloured input keys 12, 14, 16 and 18. In particular, by using the coloured input keys 12, 14, 16 and 18, the system allows assignment of data objects to four possible groups distinguished by the colours red, green, blue and yellow.

Upon actuation respectively of the red input key 12, green input key 14, blue input key 16 and yellow input key 18, the system assigns the currently highlighted data object picture to the respective red, green, blue and yellow groups.

In order for the user to keep track of the assignment of data object pictures to various groups, when a data object has been assigned to a respective group, the system causes the display to show an associated image with the data object picture. Thus, for the illustrated embodiment, when one of the coloured input keys 12, 14, 16, 18 is actuated, a corresponding coloured mark appears on the data object's picture.

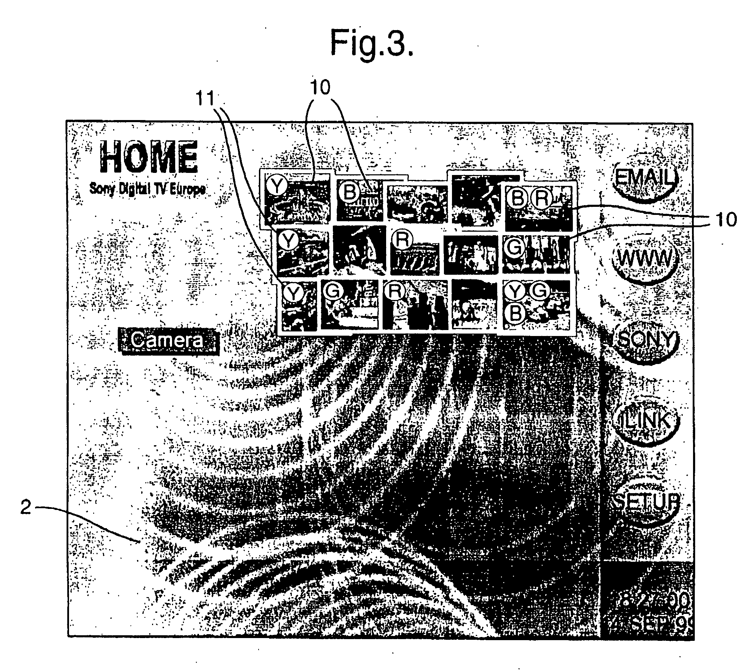

In the illustration of Figure 3, the coloured marks are represented respectively by the letters R, G, B and Y.

By actuating the appropriate coloured input key 12, 14, 16, 18 when a data object picture is highlighted, the user can assign each data object picture to one or more of the four different groups. Thus, in the example of Figure 3, the yellow group contains 4 pictures, the red group 3 pictures, the green group 3 pictures and the blue group 3 pictures. Furthermore, 5 pictures, including the top-middle picture, do not belong to any group.

Preferably, when a data group picture is already assigned to a particular group, by actuating the input key of that group again, the data object is removed from the group.

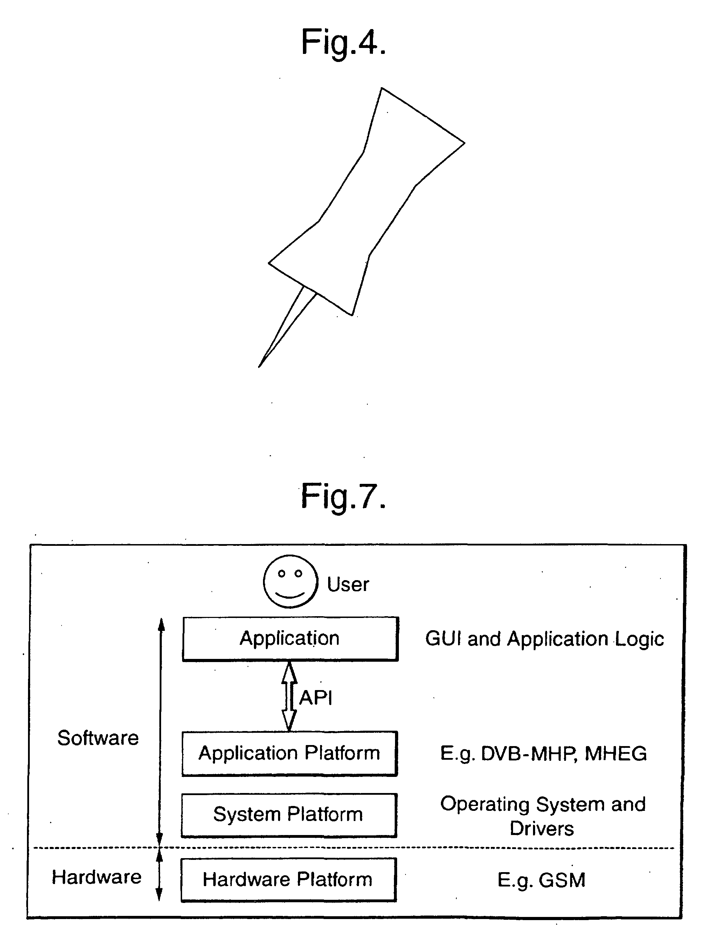

The images used with the data objects to show the group to which they have been assigned may have some decorative or meaningful appearance. Thus, as illustrated in Figure 4, the images may take the shape of pins. These pins may be coloured according to the group colouring or include on their side a symbol representing their associated input key and group.

It should be appreciated that the groups need not only be coloured groups associated with the coloured input keys 12, 14, 16 and 18. Any other input keys of a remote control unit may be used to assign data objects to respective groups. For instance, for a remote control unit having a numerical key pad, actuation of a numeric key could cause assignment of the highlighted data object to a group having the number of the data group. The image displayed with the assigned data object then shows that number in some form.

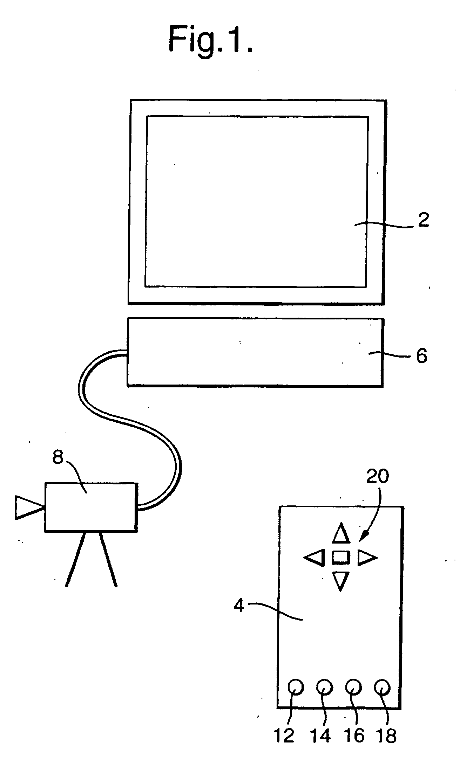

Similarly, it will be appreciated that it is not necessary to have the arrow keys 20 illustrated in Figure 1 in order to move the highlighting. It is only necessary to have one key to move the highlighting successively through the data objects. This key can be some form of arrow or cursor key. However, any other key of the remote control unit can be assigned with this function.

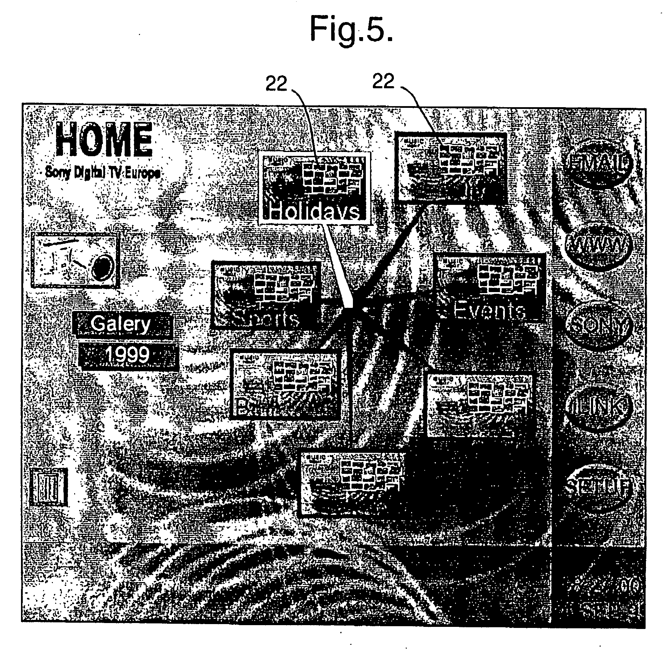

In this embodiment, the system can also display a page such as illustrated in Figure 5. In particular, the page illustrates various folders 22 available in the picture gallery, for instance, sports, holidays, events etc.

In a similar way as described above, one of the folders is highlighted and, upon actuation of an input key, the system moves the highlighting to another folder. In Figure 5, the "Holidays" folder is highlighted.

According to a preferred feature, with a folder highlighted, when one of the coloured input keys 12, 14, 16 and 18 is actuated, the system carries out a process on all of the data object pictures assigned to the group of the actuated input key to the highlighted folder. By way of example, in a "copy" mode, actuation of an input key will cause the corresponding group of data objects to be copied to the highlighted folder, ie the "Holiday" folder in the case of Figure 5. Of course, with a copy function, it is still possible to copy the same data object pictures into another folder, when that other folder is highlighted. Hence, the user can copy the same group to several destination folders.

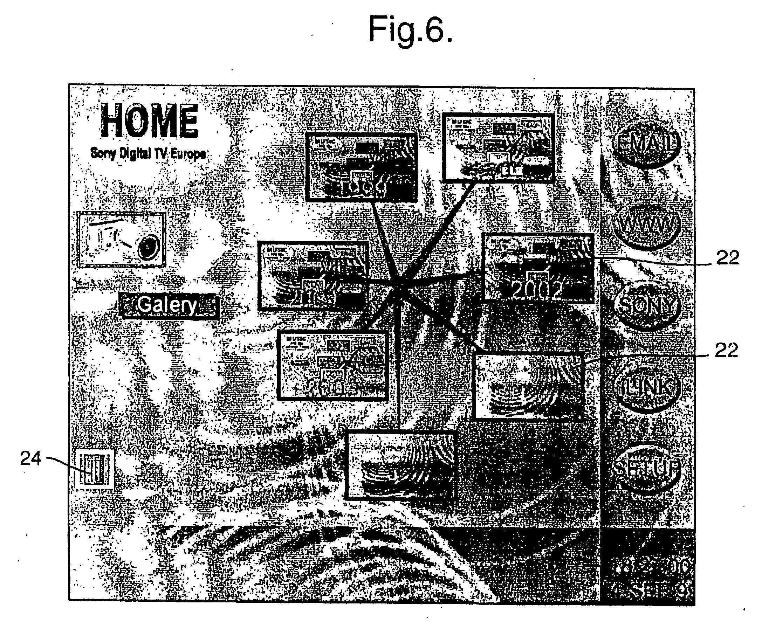

As illustrated in Figure 6, the "Trash" symbol or folder 24 can also be highlighted. With this symbol highlighted, when one of the coloured input keys is actuated, the system removes the data object pictures of the corresponding group from their current location. Thus, in the example given, they would be removed from the camera.

Figure 7 shows a layered structure as it can be found in most hardware-software systems. The present invention may be implemented on this structure as discussed below.

In Figure 7, the hardware platform consists at least of a processor and its memory, a user input device and a display device. In accordance with the description above, examples of such a hardware platform are a GSM or a digital TV set, operated by a remote control.

The system platform consists of the operating system and drivers. Amongst other things, these drivers are necessary to operate the input and display devices.

The application platform is all the software that extends the basic features of the system platform to allow an application to run on the system. In the case of a digital TV set, this may be the software stack that implements the DVB-MHP standard (Digital Video Broadcast - Multimedia Home Platform) or the MHEG standard, but it may as well be a proprietary software stack. The application platform exposes an API (Application Program Interface) to be used by the application to access all the features of the system and by the application platform to notify user interaction i.e. actuation of keys to the application.

Finally, the application is composed of application logic and a GUI (graphical user interface).

The implementation of the invention is part of the application. Such an implementation relies on the API (application program interface) that is exposed by the underlying layers. This API depends on the application domain (e.g. DVB-MHP is such an API defined for digital receivers - set-top boxes). The invention can be implemented on any such platform, as long as the hardware platform contains at least a display unit and a user input device. This GUI in the application is used by the application to display to the user the different data objects, the user input focus, the selected data objects and the data objects associated with groups. In other words, by using this layered structure, the invention may be implemented on any platform and arranged according to the input keys available. It may be available in any suitable software form and loaded on to the platform as necessary.

## Claims

1. An interactive digital hardware/software system of layered structure comprising:
a display driver (6) for displaying on a display (2) images; and
a control unit (4) including a plurality of input keys (12,14,16,18,20) for controlling the system; wherein
the display driver (6) is also for displaying on the display (2) a plurality of data objects (10) and applying highlighting to any one (10') of the displayed data objects;
the input keys of the control unit include at least one first input key (20) for causing the display driver to move the highlighting to successive displayed data objects (10) and at least one second input key (12,14,16,18) for selectively assigning the currently highlighted data object (10') to a respective group; and
when a data object is assigned to a respective group, the display driver causes the display to display with said data object an image (11) associated with said respective group.

2. A system according to claim 1 wherein the input keys of the control unit include two or more second input keys (12,14,16,18) for selectively assigning the currently highlighted data object to respective groups.

3. A system according to claim 2 wherein the input keys of the control unit include standard red, green, blue and yellow input keys (12,14,16,18) and the red, green, blue and yellow input keys are second input keys for assigning data objects to respective groups.

4. A system according to claim 3 wherein the images (11) associated with the respective groups are red, green, blue and yellow respectively corresponding to the red, green, blue and yellow input keys.

5. A system according to claim 2, 3 or 4 wherein said two or more second input keys (12,14,16,18) may assign individual data objects to two or more groups.

6. A system according to any preceding claim wherein said image (11) associated with said group corresponds in appearance to the designation of said at least one second input key used to assign data objects to said group.

7. A system according to any preceding claim wherein said at least one second input key (12,14,16,18) is additionally for selectively de-assigning the currently highlighted data object to said group.

8. A system according to any preceding claim including means for processing data objects wherein all of the data objects (10) assigned to a particular group may be processed together.

9. A system according to claim 8 wherein, when processing of data objects is to be conducted, actuation of one of said at least one second input keys (12,14,16,18) will cause said processing to be conducted on all of the data objects (10) assigned to the respective group.

10. A system according to any preceding claim wherein the data objects (10) comprise pictures which can at least be copied, moved and deleted from components of the system individually or as part of a group.

11. A system according to any preceding claim which is an interactive digital television system, the display driver (6) being for displaying on the display (2) television images.

12. A system according to claim 11 wherein the control unit is a remote control unit(4).

13. A system according to claim 11 or 12 comprising an integrated digital television.

14. A system according to claim 11 or 12 comprising a set top box(6).

15. A system according to any one of claims 11 to 14 which is DVB compliant.

16. A system according to any one of claims 11 to 15 which is MHEG and/or MHP compliant.

17. A system according to any one of claims 1 to 10 which is a GiSM set.

18. A method of grouping data objects displayed on an interactive digital hardware/software system of layered structure using the input keys of the control unit of the system, the method comprising:
displaying the data objects on the display of the system and highlighting one of the displayed data objects;
using at least one first input key of the input keys of the control unit to cause the display to move the highlighting to successive displayed data objects; and
using at least one second input key of the input keys of the control unit to selectively assign the currently highlighted data object to a respective group; wherein
when a data object is assigned to a respective group, an image associated with said respective group is displayed with said data object.

19. A method according to claim 18 using two or more second input keys (12,14,16,18) for selectively assigning the currently highlighted data object to respective groups.

20. A method according to claim 19 wherein said two or more second input keys (12,14,16,18) may assign individual data objects to two or more groups.

21. A method according to claim 18, 19 or 20 wherein said image (11) associated with said group corresponds in appearance to the designation of said at least one second input key used to assign data objects to said group.

22. A method according to any one of claims 18 to 21 including processing all of the data objects (10) assigned to a particular group together.

23. A method according to claim 22 wherein, when processing of data objects is to be conducted, actuation of one of said at least one second input keys (12,14,16,18) will cause said processing to be conducted on all of the data objects (10) assigned to the respective group.

24. A computer readable storage medium having recorded thereon code components that, when executed on a computer and executed will cause that computer to operate according to any one of claims 18 to to 23.

25. A computer readable storage medium having recorded thereon code components to form an application program that, when executed on a platform with layered programs and executed, will cause that platform to operate according to any one of claims 18 to 23.

26. A method according to any one of claims 18 to 25 for grouping data objects displayed on an interactive digital hardware/sofware system of layered structure using the input keys of the control unit of the system controlled by an application program running on layered programs.

## Patentansprüche

1. Interaktives Hardware-/Software-System mit geschichteter Struktur, welches aufweist:
eine Anzeigeansteuerung (6), um Bilder auf einer Anzeigeeinrichtung (2) anzuzeigen; und
eine Steuerungseinheit (4), die mehrere Eingabetasten (12, 14, 16, 18, 20) aufweist, um das System zu steuern; wobei
die Anzeigeansteuerung (6) auch dazu dient, auf der Anzeigeeinrichtung (2) mehrere Datenobjekte (10) anzuzeigen und eine Hervorhebung bei einem (10') der angezeigten Datenobjekte zu verwenden;
die Eingabetasten der Steuerungseinheit zumindest eine erste Eingabetaste (20) aufweisen, um zu bewirken, dass die Anzeigeansteuerung die Hervorhebung auf nachfolgende angezeigte Datenobjekte (10) bewegt, und zumindest eine zweite Eingabetaste (12, 14, 16, 18), um selektiv das aktuell hervorgehobene Datenobjekt (10') einer entsprechenden Gruppe zuzuordnen; und
wenn ein Datenobjekt einer entsprechenden Gruppe zugeordnet ist, die Anzeigeansteuerung veranlasst, dass die Anzeigeeinrichtung mit dem Datenobjekt ein Bild (11) anzeigt, welches mit der entsprechenden Gruppe verknüpft ist.

2. System nach Anspruch 1, wobei die Eingabetasten der Steuerungseinheit zwei oder mehrere zweite Eingabetasten (12, 14, 16, 18) aufweisen, um das aktuell hervorgehobene Datenobjekt entsprechenden Gruppen selektiv zuzuordnen.

3. System nach Anspruch 2, wobei die Eingabetasten der zweiten Steuereinheit Rot-, Grün-, Blau- und Gelb-Standardeingabetasten (12, 14, 16, 18) aufweisen, und die Rot-, Grün-, Blau- und Gelb-Eingabetasten zweite Eingabetasten sind, um Datenobjekte entsprechenden Gruppen zuzuordnen.

4. System nach Anspruch 3, wobei die Bilder (11), welche mit den entsprechenden Gruppen verknüpft sind, rot, grün, blau und gelb entsprechend jeweils den Rot-, Grün-, Blauund Gelb-Eingabetasten sind.

5. System nach Anspruch 2, 3 oder 4, wobei die beiden oder mehreren zweiten Eingabetasten (12, 14, 16, 18) individuelle Datenobjekte zwei oder mehreren Gruppen zuordnen können.

6. System nach einem der vorhergehenden Ansprüche, wobei das Bild (11), welches mit der Gruppe verknüpft ist, bezüglich der Erscheinungsform der Bezeichnung der zumindest einen zweiten Eingabetaste entspricht, welche verwendet wird, Datenobjekte der Gruppe zuzuordnen.

7. System nach einem der vorhergehenden Ansprüche, wobei die zumindest eine zweite Eingabetaste (12, 14, 16, 18) zusätzlich dazu dient, um das aktuell hervorgehobene Datenobjekt der Gruppe nicht zuzuordnen.

8. System nach einem der vorhergehenden Ansprüche, welches eine Einrichtung hat, um Datenobjekte zu verarbeiten, wobei alle Datenobjekte (10), die einer bestimmten Gruppe zugeordnet sind, zusammen verarbeitet werden können.

9. System nach Anspruch 8, wobei, wenn das Verarbeiten von Datenobjekten durchgeführt werden muss, eine Betätigung von einer der zumindest einen zweiten Eingabetaste (12, 14, 16, 18) bewirken wird, dass die Verarbeitung für alle Datenobjekte (10) durchgeführt wird, die der entsprechenden Gruppe zugeordnet sind.

10. System nach einem der vorhergehenden Ansprüche, wobei die Datenobjekte (10) Bilder aufweisen, die zumindest kopiert, bewegt und von Komponenten des Systems individuell oder als Teil einer Gruppe gelöscht werden können.

11. System nach einem der vorhergehenden Ansprüche, welches ein interaktives digitales Fernsehsystem ist, wobei die Anzeigeansteuerung (6) dazu dient, Fernsehbilder auf einer Anzeigeeinrichtung (2) anzuzeigen.

12. System nach Anspruch 11, wobei die Steuerungseinheit eine Fernsteuerungseinheit (4) ist.

13. System nach Anspruch 11 oder 12, welches integriertes digitales Fernsehen umfasst.

14. System nach Anspruch 11 oder 12, welches eine Set-Top-Box (6) umfasst.

15. System nach einem der Ansprüche 11 bis 14, welches DVB-verträglich ist.

16. System nach einem der Ansprüche 11 bis 15, welches MHEG- und/oder MHPverträglich ist.

17. System nach einem der Ansprüche 1 bis 10, welches ein GSM-Gerät ist.

18. Verfahren zum Gruppieren von Datenobjekten, welche auf einem interaktiven digitalen Hardware/Software-System mit geschichteter Struktur unter Verwendung der Eingabetasten der Steuerungseinheit des Systems angezeigt werden, wobei das Verfahren aufweist:
Anzeigen der Datenobjekte auf der Anzeigeeinrichtung des Systems und Hervorheben eines der angezeigten Datenobjekte;
Verwenden von zumindest einer ersten Eingabetaste der Eingabetasten der Steuerungseinheit, um zu bewirken, dass die Anzeigeeinrichtung die Hervorhebung zu nachfolgend angezeigten Datenobjekten bewegt; und
Verwendung von zumindest einer zweiten Eingabetaste der Eingabetasten der Steuerungseinheit, um die aktuell hervorgehobenen Datenobjekte einer entsprechenden Gruppe selektiv zuzuordnen; wobei
wenn ein Datenobjekt einer entsprechenden Gruppe zugeordnet ist, ein Bild, welches mit der entsprechenden Gruppe verknüpft ist, mit dem Datenobjekt angezeigt wird.

19. Verfahren nach Anspruch 18, wobei zwei oder mehrere zweite Eingabetasten (12, 14, 16, 18) verwendet werden, um das aktuell hervorgehobene Datenobjekt entsprechenden Gruppen selektiv zuzuordnen.

20. Verfahren nach Anspruch 19, wobei die beiden oder mehreren zweiten Eingabetasten (12, 14, 16, 18) individuelle Datenobjekte zwei oder mehreren Gruppen zuordnen können.

21. Verfahren nach Anspruch 18, 19 oder 20, wobei das Bild (11), welches mit dieser Gruppe verknüpft ist, bezüglich der Erscheinungsform der Bezeichnung der zumindest einen zweiten Eingabetaste entspricht, die verwendet wird, Datenobjekte der Gruppe zuzuordnen.

22. Verfahren nach einem der Ansprüche 18 bis 21, welches das Verarbeiten aller Datenobjekte (10) aufweist, welche einer bestimmten Gruppe zusammen zugeordnet sind.

23. Verfahren nach Anspruch 22, wobei, wenn die Verarbeitung von Datenobjekten durchgeführt werden soll, eine Betätigung von einer der zumindest einen zweiten Eingabetasten (12, 14, 16, 18) veranlassen wird, dass diese Verarbeitung hinsichtlich aller Datenobjekte (10) ausgeführt wird, welche der entsprechenden Gruppe zugeordnet sind.

24. Computer-lesbarer Speicherträger, auf welchem Codekomponenten aufgezeichnet sind, die, wenn auf einem Computer ausgeübt und ausgeübt werden, veranlassen werden, dass der Computer gemäß einem der Ansprüche 18 bis 23 arbeitet.

25. Computer-lesbarer Speicherträger, auf welchem Codekomponenten aufgezeichnet sind, um ein Anwendungsprogramm zu bilden, das, wenn dies auf einer Plattform mit geschichteten Programmen ausgeführt und ausgeführt wird, veranlassen wird, dass die Plattform gemäß einem der Ansprüche 18 bis 23 arbeitet.

26. Verfahren nach einem der Ansprüche 18 bis 25, um Datenobjekte, die auf einem interaktiven digitalen Hardware-/Software-System mit geschichteter Struktur angezeigt werden, unter Verwendung von Eingabetasten der Steuerungseinheit des Systems, welches durch ein Anwendungsprogramm gesteuert wird, welches auf geschichteten Programmen läuft, zu gruppieren.

## Revendications

1. Système interactif de composants matériels/logiciels numériques constitué par une structure en couches comprenant
un dispositif de pilotage d'affichage (6) pour afficher sur un affichage (2) des images; et
une unité de commande (4) qui inclut une pluralité de touches d'entrée (12, 14, 16, 18, 20) pour commander le système,
dans lequel :
le dispositif de pilotage d'affichage (6) est également prévu pour afficher sur l'affichage (2) une pluralité d'objets de données (10) et pour appliquer un suréclairage sur l'un quelconque (10') des objets de données affichés ;
les touches d'entrée de l'unité de commande incluent au moins une première touche d'entrée (20) pour faire en sorte que le dispositif de pilotage d'affichage déplace le sur-éclairage jusqu'à des objets de données affichés successifs (10) et au moins une seconde touche d'entrée (12, 14, 16, 18) pour assigner de façon sélective l'objet de données sur-éclairé présentement (10') à un groupe respectif ; et
lorsqu'un objet de données est assigné à un groupe respectif, le dispositif de pilotage d'affichage a pour effet que l'affichage affiche avec ledit objet de données une image (11) qui est associée audit groupe respectif.

2. Système selon la revendication 1, dans lequel les touches d'entrée de l'unité de commande incluent deux secondes touches d'entrée ou plus (12, 14, 16, 18) pour assigner de façon sélective l'objet de données sur-éclairé présentement à des groupes respectifs.

3. Système selon la revendication 2, dans lequel les touches d'entrée de l'unité de commande incluent des touches d'entrée de rouge, de vert, de bleu et de jaune standards (12, 14, 16, 18) et les touches d'entrée de rouge, de vert, de bleu et de jaune sont des secondes touches d'entrée pour assigner des objets de données à des groupes respectifs.

4. Système selon la revendication 3, dans lequel les images (11) qui sont associées aux groupes respectifs sont rouge, vert, bleu et jaune de façon respective en correspondance avec les touches d'entrée de rouge, de vert, de bleu et de jaune.

5. Système selon la revendication 2, 3 ou 4, dans lequel lesdites deux secondes touches d'entrée ou plus (12, 14, 16, 18) peuvent assigner des objets de données individuels à deux groupes ou plus.

6. Système selon l'une quelconque des revendications précédentes, dans lequel ladite image (11) qui est associée audit groupe correspond en termes d'apparence à la désignation de ladite au moins une seconde touche d'entrée qui est utilisée pour assigner des objets de données audit groupe.

7. Système selon l'une quelconque des revendications précédentes, dans lequel ladite au moins une seconde touche d'entrée (12, 14, 16, 18) est de façon additionnelle prévue pour désassigner de façon sélective l'objet de données sur-éclairé présentement vis-à-vis dudit groupe.

8. Système selon l'une quelconque des revendications précédentes, incluant un moyen pour traiter des objets de données où tous les objets de données (10) assignés à un groupe particulier peuvent être traités ensemble.

9. Système selon la revendication 8, dans lequel, lorsqu'un traitement d'objets de données doit être mis en oeuvre, l'actionnement de l'une desdites au moins une seconde touche d'entrée (12, 14, 16, 18) aura pour effet que ledit traitement est mis en oeuvre sur tous les objets de données (10) qui sont assignés au groupe respectif.

10. Système selon l'une quelconque des revendications précédentes, dans lequel les objets de données (10) comprennent des images qui peuvent être au moins copiées, déplacées ou supprimées depuis des composants du système de façon individuelle ou en tant que partie d'un groupe.

11. Système selon l'une quelconque des revendications précédentes, qui est un système de télévision numérique interactive, le dispositif de pilotage d'affichage (6) étant pour afficher sur l'affichage (2) des images de télévision.

12. Système selon la revendication 11, dans lequel l'unité de commande est une unité de commande à distance ou de télécommande (4).

13. Système selon la revendication 11 ou 12, comprenant une télévision numérique intégrée.

14. Système selon la revendication 11 ou 12, comprenant un boîtier de décodeur (6).

15. Système selon l'une quelconque des revendications 11 à 14 qui est compatible DVB.

16. Système selon l'une quelconque des revendications 11 à 15, qui est compatible MHEG et/ou MHP.

17. Système selon l'une quelconque des revendications 1 à 10, qui est un poste GSM.

18. Procédé de groupage d'objets de données qui sont affichés sur un système interactif de composants matériels/logiciels numériques constitué par une structure en couches utilisant les touches d'entrée de l'unité de commande du système, le procédé comprenant :
l'affichage des objets de données sur l'affichage du système et le suréclairage de l'un des objets de données affichés ;
l'utilisation d'au moins une première touche d'entrée des touches d'entrée de l'unité de commande pour faire en sorte que l'affichage déplace le suréclairage sur des objets de données affichés successifs ; et
l'utilisation d'au moins une seconde touche d'entrée des touches d'entrée de l'unité de commande pour assigner de façon sélective l'objet de données suréclairé présentement à un groupe respectif,
dans lequel :
lorsqu'un objet de données est assigné à un groupe respectif, une image qui est associée audit groupe respectif est affichée avec ledit objet de données.

19. Procédé selon la revendication 18 qui utilise deux secondes touches d'entrée ou plus (12, 14, 16, 18) pour assigner de façon sélective l'objet de données sur-éclairé présentement à des groupes respectifs.

20. Procédé selon la revendication 19, dans lequel lesdites deux secondes touches d'entrée ou plus (12, 14, 16, 18) peuvent assigner des objets de données individuels à deux groupes ou plus.

21. Procédé selon la revendication 18, 19 ou 20, dans lequel ladite image (11) qui est associée audit groupe correspond en termes d'apparence à la désignation de ladite au moins une seconde touche d'entrée qui est utilisée pour assigner des objets de données audit groupe.

22. Procédé selon l'une quelconque des revendications 18 à 21, incluant le traitement de tous les objets de données (10) qui sont assignés à un groupe particulier ensemble.

23. Procédé selon la revendication 22, dans lequel, lorsqu'un traitement d'objets de données doit être mis en oeuvre, l'actionnement de l'une desdites au moins une seconde touche d'entrée (12, 14, 16, 18) aura pour effet que ledit traitement est mis en oeuvre sur tous les objets de données (10) qui sont assignés au groupe respectif.

24. Support de stockage lisible par ordinateur comportant enregistrés sur lui des composants de code qui, lorsqu'ils sont exécutés sur un ordinateur, ont pour effet que l'ordinateur fonctionne selon l'une quelconque des revendications 18 à 23.

25. Support de stockage lisible par ordinateur comportant enregistrés sur lui des composants de code pour former un programme d'application qui, lorsqu'il est exécuté sur une plate-forme avec des programmes en couches, aura pour effet que la plate-forme fonctionne selon l'une quelconque des revendications 18 à 23.

26. Procédé selon l'une quelconque des revendications 18 à 25 pour le groupage d'objets de données affichés sur un système interactif de composants matériels/logiciels numériques constitué par une structure en couches utilisant les touches d'entrée de l'unité de commande du système commandé par un programme d'application exécuté sur des programmes en couche.
